# EUROPÄISCHE PATENTSCHRIFT

(11) **EP 2 504 795 B1**
(45) Veröffentlichungstag und Bekanntmachung des Hinweises auf die Patenterteilung: **21.06.2017**
(21) Anmeldenummer: 10785336.8
(22) Anmeldetag: 12.11.2010
(51) Int. Cl.: G06K 19/067

(54) **MEHRSCHICHTKÖRPER**
MULTILAYER ELEMENT
CORPS MULTICOUCHE

(30) Priorität: 23.11.2009 DE 102009053978
(43) Veröffentlichungstag der Anmeldung: 03.10.2012
(73) Patentinhaber: Leonhard Kurz Stiftung & Co. KG, 90763 Fürth (DE)
(72) Erfinder: PETERS, John Anthony, CH-8804 Au (CH); SCHINDLER, Ulrich, 90762 Fürth (DE)
(74) Vertreter: Zinsinger, Norbert
(86) Internationale Anmeldenummer: PCT/EP2010/006916
(87) Internationale Veröffentlichungsnummer: WO 2011/060906

(56) Entgegenhaltungen:
- WO-A1-2008/071406

## Beschreibung

Die Erfindung betrifft einen Mehrschichtkörper, Insbesondere ein Sicherheitselement zur Sicherung von Sicherheitsdokumenten.

Aus EP 1 179 811 A1 und DE 19 601 358 A1 sind Sicherheitsdokumente bekannt, welche eine maschinell auslesbare Codierung aufweisen. So beschreibt DE 19 601 358 A1 eine Banknote, welche einen Chip und eine Antenne aufweist. Der Chip moduliert auf ein eingestrahltes RF-Signal (RF = radio frequency) eine im Chip gespeicherte kodierte Information auf, sodass ein berührungsloses Auslesen dieser Information ermöglicht wird.

Nachteilig an diesem Konzept ist, dass Sicherheitsdokumente häufig über ein relativ dünnes Papier- oder Kunststoffträgersubstrat verfügen, sodass die Verwendung eines in Relation zum Trägersubstrat relativ dicken Silizium-Chips zu Problemen bei der Handhabung des Sicherheitsdokuments führt und die bei der üblichen Verwendung eines solchen Sicherheitsdokuments auftretenden Biege- und Knickbelastungen zu einem Brechen oder einer Beschädigung des eingebrachten Silizium-Chips oder dessen Kontaktierung zur Antenne führen können.

Aus DE 10200404160 A1 ist weiter ein Verfahren zur Identifizierung von mindestens einer Antenne anhand deren Resonanzfrequenz durch ein Identifikationssystem bekannt. Bei diesem Verfahren wird von einem Lesegerät ein Strahlungsimpuls in einer vorgebbaren ersten Zeitdauer und einem vorgebbaren ersten Frequenzbereich emittiert. Nach Emittierung des Strahlungsimpulses wird elektromagnetische Strahlung in einem vorgebbaren zweiten Frequenzbereich für eine vorgebbare zweite Zeitdauer detektiert. Dieses Detektionssignal erlaubt einen Rückschluss auf die Resonanzfrequenz der Antenne und somit eine zuverlässige Entscheidung, ob die Antenne in dem Einflussbereich des Lesegeräts vorhanden ist oder nicht. Weiter wird auch beschrieben, mehrere Antennen nebeneinander anzuordnen.

Aus der WO 2008/071 406 A1 ist ein weiterer Mehrschichtkörper bekannt, der mit einer maschinell auslesbaren Codierung versehen ist. Dieser umfasst eine erste Schicht aus einem dielektrischen Material und eine zweite, partielle Schicht aus einem elektrisch leitfähigen Material. In einem Flächenbereich der zweiten Schicht ist eine Mehrzahl von benachbarten Antennenstrukturen angeordnet, die jeweils unterschiedliche Resonanzfrequenzen aufweisen. Die aus dem Stand der Technik bekannten Merkmale sind im Oberbegriff von Anspruch 1 genannt.

Der Erfindung liegt nun die Aufgabe zugrunde, einen verbesserten Mehrschichtkörper mit einer maschinell auslesbaren Codierung anzugeben.

Diese Aufgabe wird von einem Mehrschichtkörper mit einer maschinell auslesbaren Codierung gelöst, der eine erste Schicht aus einem dielektrischen Material, eine partiell auf einer ersten Oberfläche der ersten Schicht vorgesehene zweite Schicht aus einem elektrisch leitfähigen Material aufweist, wobei in einem Flächenbereich die zweite Schicht in Form von N ersten spulenförmigen Strukturen ausgeformt ist, und wobei M zweite spulenförmige Strukturen (61-68) vorgesehen sind, wobei die ersten und zweiten spulenförmigen Strukturen jeweils unterschiedliche Geometrien und unterschiedliche, vorbestimmte Resonanzfrequenzen aufweisen und die maschinell auslesbare Codierung bereitstellen
, wobei die N ersten spulenförmigen Strukturen und/oder die M zweiten spulenförmigen Strukturen jeweils von einer spulenförmig angeordneten Leiterbahn gebildet werden, die zwischen ein und 50 Windungen aufweisen und dass jede der N ersten spulenförmigen Strukturen und/oder jede der M zweiten spulenförmigen Strukturen einen Flächenbereich von weniger als 1000 mm² belegt, und wobei der Mehrschichtkörper eine partiell auf einer der ersten Oberfläche gegenüberliegenden zweiten Oberfläche der ersten Schicht vorgesehene dritte Schicht aus einem elektrisch leitfähigen Material aufweist, wobei die zweite und die dritte Schicht weniger als 100 µm voneinander beabstandet sind. und die dritte Schicht in Form der M zweiten spulenförmigen Strukturen ausgeformt ist, und wobei jede der im ersten Flächenbereich ausgeformten N ersten spulenförmigen Strukturen und M zweiten spulenförmigen Strukturen so zueinander angeordnet sind, dass im ersten Flächenbereich jede der ersten spulenförmigen Strukturen bereichsweise in Überdeckung mit mindestens einer der M zweiten spulenförmigen Strukturen angeordnet ist und dass der Flächenschwerpunkt der flächenmäßig kleineren von zwei sich bereichsweise überdeckend angeordneten ersten und zweiten spulenförmigen Struktur nicht weiter als D/2 x 0,5 vom äußeren Rand der flächenmäßig größeren der zwei sich bereichsweise überdeckend angeordneten ersten und zweiten spulenförmigen Strukturen entfernt ist, wobei D das Integral über die sich für alle Raumrichtungen vom Flächenschwerpunkt der flächenmäßig größeren der zwei sich bereichsweise überdeckend angeordneten ersten und zweiten spulenförmigen Strukturen aus ergebenden Durchmesser ist.

Überraschenderweise hat sich gezeigt, dass bei der wie oben beschriebenen Anordnung von zwei in unterschiedlichen Ebenen liegenden spulenförmigen Strukturen zueinander trotz Überlappung der spulenförmigen Struktur ausreichend deutlich unterschiedliche Resonanzpeaks durch die überlappend angeordneten spulenförmigen Strukturen erzielt werden können, sodass durch die Erfindung innerhalb eines Flächenbereichs eine maschinell auslesbare Codierung eingebracht werden kann, welche sich durch eine hohe Informationsdichte und hohe Fälschungssicherheit auszeichnet und ein hohes Maß an Beständigkeit gegenüber Umwelteinflüssen und mechanischen Belastungen aufweist. Aufgrund der hohen Informationsdichte und der komplexen Bedingungen, an die in unterschiedlichen Ebenen angeordneten spulenförmigen Struktur gestellt werden, lässt sich die in einem erfindungsgemäßen Mehrschichtkörper gespeicherte maschinell auslesbare Codierung kaum durch bekannte Anordnungen nachahmen oder eine verfälschte maschinell auslesbare Codierung erstellen. Im Folgenden wird unter Resonanzpeak ein vergleichsweise schmalbandiges, impulsförmiges Signal innerhalb eines Frequenzbereiches, welches sich messtechnisch gut erfassen lässt, bezeichnet.

Vorteilhafte Ausgestaltungen der Erfindung sind in den Unteransprüchen bezeichnet.

Ferner werden die ersten und zweiten spulenförmigen Strukturen im ersten Flächenbereich so zueinander angeordnet, dass der Flächenschwerpunkt der flächenmäßig kleineren von zwei sich bereichsweise überdeckend angeordneten ersten und zweiten spulenförmigen Strukturen nicht weiter als D/2 x 0,25, weiter bevorzugt nicht mehr als 0,10, vom äußeren Rand der flächenmäßig größeren der zwei sich bereichsweise überdeckend angeordneten ersten und zweiten spulenförmigen Strukturen entfernt ist. Eine derartige Anordnung der ersten und zweiten spulenförmigen Struktur bringt den Vorteil mit sich, dass hierdurch die Signalstärke des Resonanzpeaks weiter verbessert wird und sich damit der maximal mögliche Leseabstand vergrößert.

Vorzugsweise sind im ersten Flächenbereich zwei oder mehr benachbart zueinander angeordnete erste spulenförmige Strukturen in der zweiten Schicht ausgeformt, die zueinander unterschiedliche Geometrien und unterschiedliche vorbestimmte Resonanzfrequenzen aufweisen. Weiter ist auch vorteilhaft, dass im ersten Flächenbereich zwei oder mehr der benachbart zueinander angeordneten zweiten spulenförmigen Strukturen in der dritten Schicht ausgeformt sind, die zueinander unterschiedliche Geometrien und unterschiedliche, vorbestimmte Resonanzfrequenzen aufweisen. Vorzugsweise weisen sämtliche in dem ersten Flächenbereich angeordneten ersten und zweiten spulenförmigen Strukturen zueinander unterschiedliche Geometrien und unterschiedliche, vorbestimmte Resonanzfrequenzen auf. Durch diese Maßnahme kann eine besonders hohe Informationsdichte erzielt werden.

Ferner ist im ersten Flächenbereich jeder der zweiten spulenförmigen Strukturen bereichsweise in Überdeckung mit mindestens zwei der ersten spulenförmigen Strukturen angeordnet. Es hat sich gezeigt, dass durch diese Maßnahmen zum einen die Informationsdichte weiter erhöht werden kann und zum anderen sich eine weitere Verbesserung der Fälschungssicherheit ergibt.

Es hat sich bewährt, dass im ersten Bereich die N ersten spulenförmigen Strukturen und/oder die M zweiten spulenförmigen Strukturen jeweils von den übrigen der ersten und/oder zweiten spulenförmigen Strukturen galvanisch getrennt sind. Hierdurch kann die Signalstärke der Resonanzpeaks weiter verbessert werden.

Weiterhin werden die N ersten spulenförmigen Strukturen und/oder die M zweiten spulenförmigen Strukturen jeweils von einer spulenförmig angeordneten Leiterbahn gebildet, die zwischen ein und fünfzig Windungen aufweist. Die Windungen der Leiterbahn der N ersten spulenförmigen Strukturen und/oder M zweiten spulenförmigen Strukturen sind hierbei vorzugsweise weniger als 0,5 mm voneinander beabstandet, vorzugsweise zwischen 0,05 bis 0,5 mm, weiter bevorzugt zwischen 0,05 mm und 0,3 mm voneinander beabstandet. Die Leiterbahnen der spulenförmigen Strukturen können eine Breite von weniger als 5 mm, bevorzugt zwischen 0,05 mm und 5 mm aufweisen, weiter bevorzugt zwischen 0,05 mm und 1 mm.

Vorzugsweise sind die ersten und/oder zweiten spulenförmigen Strukturen so ausgestaltet, dass die unterschiedlichen vorbestimmten Resonanzfrequenzen der N ersten spulenförmigen Strukturen und/oder M zweiten spulenförmigen Strukturen in einem Frequenzband von 15 MHz bis 2,0 GHz liegen.

Die zweite und dritte elektrisch leitfähige Schicht besteht bevorzugt aus mindestens einem metallischen Material, beispielsweise Aluminium (Al), Kupfer (Cu), Silber (Ag) oder auch aus einer Metalllegierung, oder aus einem Schichtengebilde aus mehreren Metallschichten aus gleichen oder unterschiedlichen Metallen oder Metalllegierungen unterschiedlicher oder etwa gleicher Schichtdicken. Die Schichtdicke der zweiten und der dritten elektrisch leitfähigen Schicht beträgt vorzugsweise weniger als 10 µm und zwischen 0,1 bis 10 µm, weiter bevorzugt zwischen 0,2 und 1,2 µm.

Gemäß eines weiteren bevorzugten Ausführungsbeispiels der Erfindung sind die N ersten spulenförmigen Strukturen und/oder M zweiten spulenförmigen Strukturen in dem ersten Flächenbereich in einer eindimensionalen oder zweidimensionalen Anordnung gemäß eines vorbestimmten ersten bzw. zweiten Rasters angeordnet. Hierbei ist es möglich, dass die Rasterweiten des ersten und/oder zweiten Rasters konstant sind, wobei die Rasterweiten jeweils durch die Beabstandung der Flächenschwerpunkte der ersten bzw. zweiten spulenförmigen Strukturen bestimmt sind. Es ist jedoch auch möglich, dass die Rasterweiten variieren, sich insbesondere in eine Raumrichtung konstant erhöhen oder erniedrigen. Weiter ist es möglich, dass das erste und/oder das zweite Raster von einem geometrisch transformierten Raster gebildet wird/werden, bei dem eine der Koordinatenachse des Rasters beispielsweise eine schlangenlinienförmige Formgebung besitzt. Unter einer eindimensionalen Anordnung von spulenförmigen Strukturen wird hierbei eine Anordnung verstanden, bei der zwei oder mehr spulenförmige Strukturen in einer ersten Raumrichtung aufeinander abfolgen. Unter einer zweidimensionalen Anordnung von spulenförmigen Strukturen wird eine Anordnung verstanden, bei der jeweils zwei oder mehr spulenförmige Strukturen in zwei voneinander unterschiedlichen Raumrichtungen aufeinander abfolgen. Vorzugsweise stehen diese beiden Raumrichtungen hierbei aufeinander senkrecht. Im Weiteren liegen diese Raumrichtungen vorzugsweise auch in der von der ersten Schicht aufgespannten Ebene (bei Vernachlässigung der Schichtdicke der ersten Schicht, die erheblich kleiner als die Länge bzw. Breite der ersten Schicht ist).

Vorzugsweise liegt jede der N ersten spulenförmigen Strukturen und/oder jeder der M zweiten spulenförmigen Strukturen in einem Flächenbereich von weniger als 1000 mm²_{.}

Die Beabstandung benachbarter erster spulenförmiger Strukturen und/oder die Beabstandung benachbarter zweiter spulenförmiger Strukturen beträgt vorzugsweise zwischen 0,5 und 5 mm, weiter bevorzugt zwischen 0,5 und 1 mm. Unter Beabstandung benachbarter spulenförmiger Strukturen wird hierbei die Beabstandung der äußeren Ränder dieser Strukturen verstanden.

Die Abmessung des ersten Flächenbereichs beträgt vorzugsweise weniger als 6 x 9 cm, weiter bevorzugt weniger als 2 x 2 cm. Die Anzahl N erster spulenförmiger Strukturen im ersten Flächenbereich beträgt vorzugsweise zwischen 2 und 18, weiter bevorzugt zwischen 2 und 9 und die Anzahl M zweiter spulenförmiger Strukturen im ersten Flächenbereich beträgt vorzugsweise zwischen 1 und 6, weiter bevorzugt zwischen 1 und 3. Weiter ist es auch möglich, dass neben dem ersten Flächenbereich in dem Mehrschichtkörper noch ein oder mehrere zweite Flächenbereiche vorgesehen sind, die weitere maschinell auslesbare Codierung bereitstellen. Diese zwei oder mehr zweiten Flächenbereiche können hierbei in gleicher Weise wie der erste Flächenbereich ausgestaltet sein. Die Beabstandung der unterschiedlichen ersten und zweiten Flächenbereiche zueinander beträgt hierbei bevorzugt mehr als 5 mm und die ersten und zweiten Flächenbereiche sind bevorzugt gemäß eines vorbestimmten Linienrasters oder Flächenrasters angeordnet, um ein entsprechendes Auslesen der ersten und zweiten Flächenbereiche mittels eines Lesekopfs durch Positionierung des Lesekopfs über den jeweiligen Flächenbereich zu ermöglichen.

Die Schichtdicke der ersten Schicht beträgt bevorzugt zwischen 2 µm und 100 µm, weiter bevorzugt zwischen 2 µm und 50 µm. Bei der sich hierdurch ergebenden engen Beabstandung der zweiten und dritten elektrisch leitfähigen Schicht, welche die Einsatzmöglichkeit des Mehrschichtkörpers sowie dessen Fälschungssicherheit und mechanische Belastbarkeit erhöht, wird durch die speziell wie oben beschriebene Anordnung der ersten und zweiten spulenförmigen Strukturen eine verwertbare Generierung der verschiedenen Resonanzpeaks ermöglicht, wie oben dargelegt.

Vorzugsweise ist die erste Schicht hierbei transparent ausgebildet, sodass das optische Erscheinungsbild des Mehrschichtkörpers auch durch die untere der zweiten und dritten elektrisch leitfähigen Schicht beeinflusst wird.

Die erste Schicht kann hierbei aus einer einzelnen homogenen Schicht, beispielsweise aus einem transparenten Lack oder aus einer transparenten Kunststofffolie bestehen. Es ist weiter auch möglich, dass die erste Schicht aus zwei oder mehr übereinander liegenden Teilschichten besteht.

Gemäß eines bevorzugten Ausführungsbeispiels der Erfindung ist in der ersten Oberfläche der ersten Schicht eine erste Oberflächenstruktur geformt und/oder in der zweiten Oberfläche der ersten Schicht eine zweite Oberflächenstruktur abgeformt.

Die erste und zweite Oberflächenstruktur kann zum einen die elektrischen Eigenschaften der ersten bzw. zweiten spulenförmigen Struktur beeinflussen, sodass die Fälschungssicherheit des Mehrschichtkörpers weiter erhöht wird. Weiter ist es auch möglich, dass die erste und zweite Oberflächenstruktur so ausgestaltet ist, dass sie - insbesondere in Verbindung mit einer Reflexionsschicht oder einer Schicht mit einem Brechungsindexunterschied von mehr als 0,2 zwischen den beiden an sie angrenzenden Schichten - optisch variable Informationen bereitstellt:
Vorzugsweise sind sowohl in die erste Oberfläche als auch in die zweite Oberfläche derartige Oberflächenstrukturen abgeformt und zur Generierung unterschiedlicher optisch variabler Informationen ausgeformt, sodass die erste Oberflächenstruktur eine erste optisch variable Information und die zweite Oberflächenstruktur eine zweite optisch variable Information generiert. Insbesondere in der Verbindung mit einer transparenten oder transluzenten Ausgestaltung der ersten Schicht sind diese Informationen zumindest teilweise damit von der Oberseite, der Unterseite oder in Überlagerung von der Oberseite und der Unterseite her sichtbar, wodurch die Fälschungssicherheit des Mehrschichtkörpers weiter erheblich verbessert werden kann.

Gemäß eines bevorzugten Ausführungsbeispiels der Erfindung bilden die erste und die zweite optisch variable Information hierbei einander ergänzende Informationen, beispielsweise Teilmotive eines Gesamtmotivs. Hierdurch ist es erforderlich, die ersten und zweiten Oberflächenstrukturen und ggf. auch die zweite und dritte Schicht mit hoher Registergenauigkeit zueinander zu positionieren und Fälschungsversuche werden für den Benutzer unmittelbar erkennbar. Bevorzugt enthalten die ersten und zweiten Informationen hierbei mehrere ineinander übergehende Linien oder Flächenbereiche, sodass bereits kleine Registerungenauigkeiten unmittelbar für den menschlichen Betrachter erkennbar werden.

Vorzugsweise sind die erste und die zweite Oberflächenstruktur ausgewählt aus der Gruppe: Diffraktive Oberflächenstruktur, refraktive Oberflächenstruktur, Mattstruktur, diffraktive Linsenstruktur, diffraktive Freiformfläche, refraktive Linsenstruktur, Blaze Gitter. Eine diffraktive Oberflächenstruktur weist hierbei vorzugsweise eine Spatialfrequenz von mehr als 250 Linien/mm, insbesondere eine Spatialfrequenz zwischen 500 Linien/mm bis 2000 Linien/mm auf. Als Mattstruktur werden vorzugsweise holographisch hergestellte Mattstrukturen mit Korrelationslängen zwischen 0,5 und 20 µm eingesetzt. Als refraktive Linsenstrukturen werden vorzugsweise Mikrolinsenfelder mit einer Linsenbreite der jeweiligen Mikrolinsen von 20 µm bis 100 µm eingesetzt.

Die Relieftiefe der ersten und zweiten Oberflächenstruktur beträgt vorzugsweise zwischen 0,1 und 50 µm, vorzugsweise zwischen 0,1 µm und 20 µm.

Vorzugsweise wird für die zweite und/oder dritte elektrisch leitfähige Schicht ein Material gewählt, welches über ausreichende reflektive Eigenschaften verfügt, um als Reflexionsschicht zur Sichtbarmachung des von der ersten bzw. zweiten Oberflächenstruktur generierten optisch variablen Effekts zu wirken. Die elektrisch leitfähige zweite und dritte Schicht erbringt somit eine Doppelfunktion, nämlich die Generierung der mittels eines RF-Signal auslesbaren Codierung sowie eine Reflexionsschicht zur Sichtbarmachung der ersten bzw. zweiten optisch variablen Information.

Gemäß eines weiteren bevorzugten Ausführungsbeispiels der Erfindung wird nach Aufbringen der zweiten bzw. dritten Schicht auf die erste Schicht jeweils noch eine weitere Struktur, beispielsweise eine Lack- oder Klebeschicht aufgebracht, die bezüglich des Brechungsindex so gewählt ist, dass dieser nicht mehr als 0,2 von dem Brechungsindex des sich an der ersten bzw. zweiten Oberfläche der ersten Schicht befindlichen Material unterscheidet. Hierdurch wird sichergestellt, dass der optisch variable Effekt der ersten bzw. zweiten Oberflächenstruktur im ersten Bereich lediglich in den Zonen sichtbar wird, in denen die zweite bzw. dritte elektrisch leitfähige Schicht zur Ausbildung der ersten bzw. zweiten spulenförmigen Struktur vorgesehen ist. Hierdurch geht die Ausformung der ersten bzw. zweiten spulenförmigen Strukturen ebenfalls in die sich insgesamt ergebene optisch variable Information ein, wodurch eine weitere Interaktion zwischen den optischen und den mittels RF-Signalen auslesbaren Informationen bewirkt wird und sich die Fälschungssicherheit weiter erhöht.

Gemäß eines weiteren bevorzugten Ausführungsbeispiels ist die erste Oberfläche der ersten Schicht und/oder die zweite Oberfläche der ersten Schicht zumindest bereichsweise in den nicht mit der zweiten Schicht bzw. dritten Schicht bedeckten Zonen mit einer HRI-Schicht (HRI = High Refraction Index = Hoher Brechungsindex) versehen und die erste Oberflächenstruktur bzw. die zweite Oberflächenstruktur zumindest bereichsweise in den nicht mit der zweiten bzw. dritten elektrisch leitfähigen Schicht versehenen Zonen vorgesehen. Hierdurch wird ermöglicht, dass die optisch variable Information bzw. zweite Information auch in den Zonen sichtbar ist, oder lediglich in den Zonen sichtbar ist, in denen die zweite bzw. dritte Schicht nicht vorgesehen ist. Hierdurch kann eine bessere Überlagerung der optische variablen Effekte der ersten und zweiten optisch variablen Informationen erzielt werden und auch eine Verschleierung der Ausformung der zweiten und ersten elektrisch leitfähigen Schicht als spulenförmige Strukturen erzielt werden. Vorzugsweise wird hierbei lediglich die dem menschlichen Betrachter abgewandte Oberfläche der ersten Schicht mit der HRI-Schicht versehen, wodurch Abschattungseffekte vermieden werden und sowohl die erste als auch die zweite optisch variable Information zur Ausbildung einer Gesamtinformation beitragen können.

Weiter ist es vorteilhaft, wenn die erste Schicht als Teilschicht eine Ablöseschicht umfasst. Durch diese Ablöseschicht wird eine Ablösung des Mehrschichtkörpers von dem Zielsubstrat, beispielsweise von einem Sicherheitsdokument dadurch erschwert, dass das Gefüge aus erster, zweiter und dritter Schicht auf Ebene der Ablöseschicht getrennt oder auch zerstört wird, sodass sich aus den einzelnen Teilschichten weder die maschinell auslesbare Codierung noch das optisch variable Erscheinungsbild des Mehrschichtkörpers rekonstruieren lässt.

Weiter ist diese Ablöseschicht vorzugsweise nicht vollflächig ausgebildet sondern im ersten Bereich durch ein oder mehrere Haftbrücken unterbrochen. Dies führt nun dazu, dass auf einem Ablöseversuch die erste, zweite oder dritte Schicht partiell zerstört wird und damit der Schutz gegenüber einer Nachahmung weiter verbessert wird.

Besonders vorteilhaft ist es hierbei, wenn die Ablöseschicht, insbesondere in bereichsweiser Ausgestaltung mit Haftbrücken, unmittelbar auf eine dielektrische Schicht folgt, bei der eine gegenüberliegende Oberfläche in Kontakt mit der zweiten bzw. dritten elektrisch leitfähigen Schicht steht. Hierdurch wird sichergestellt, dass beim Ablöseversuch die die maschinell auslesbare Codierung bereitstellenden spulenförmigen Strukturen zerstört werden und damit eine Nachahmung oder Manipulation des Mehrschichtkörpers weiter erschwert wird.

Der Mehrschichtkörper kann als Laminierfolie oder Prägefolie ausgebildet sein, welche neben den oben angeführten Schichten auch noch weitere Schichten, insbesondere Klebe- oder Haftvermittlungsschicht, Schutzschichten und Dekorschichten enthalten kann. Dekorschichten können hierbei einfarbig, transparent, transluzent oder opak oder in einem farbigen Druck gestaltet sein, aber auch als optisch variable Schichten ausgebildet sein, und so beispielsweise Dünnfilmschichten, Schichten von Effektpigmenten (Dünnfilmschichtpigmente, Flüssigkristallpigmente), lumineszente Schichten oder optisch aktive Oberflächenstrukturen oder ein Volumenhologramm enthaltende Schicht aufweisen. Bei der Ausgestaltung als Transferfolie kann der Mehrschichtkörper hierbei als Heißprägefolie oder auch als Kaltprägefolie ausgebildet sein und weist hierzu eine abziehbare Trägerfolie, eine optionale Ablöseschicht und eine optionale Klebeschicht (Heißkleber oder Kaltkleber) auf, mittels der die Transferlage der Transferfolie auf dem Zielsubstrat festgelegt werden kann.

Vorzugsweise wird der erfindungsgemäße Mehrschichtkörper als Sicherheitselement zur Sicherung von Wertdokumenten, beispielsweise Banknoten, ID-Dokumenten, Kreditkarten und ähnlichem verwendet. Der Mehrschichtkörper kann hier beispielsweise in Form eines Streifens, eines Patches oder als großflächiges Overlay ausgeformt sein. Neben den im ersten Bereich vorgesehenen, die maschinell auslesbare Codierung bereitstellenden Strukturen kann der Mehrschichtkörper in weiteren Bereichen noch weitere maschinell auslesbare Codierungen und/oder optische Sicherheitsmerkmale aufweisen.

Weiter ist es auch möglich, dass der Mehrschichtkörper zum Schutz von Ware und Verpackungen eingesetzt wird.

Weiter ist es möglich, dass der Mehrschichtkörper als Wertdokument ausgebildet ist.

Im Folgenden wird die Erfindung anhand von mehreren Ausführungsbeispielen unter Zuhilfenahme der beiliegenden Zeichnungen beispielhaft erläutert.
- Fig. 1a bis Fig. 1c: zeigen schematische Schnittdarstellungen zur Verdeutlichung der Herstellung eines Mehrschichtkörpers mit maschinell auslesbarer Codierung.
- Fig. 2a: zeigt eine schematische Draufsicht auf einen Bereich des Mehrschichtkörpers nach Fig. 1c.
- Fig. 2b: zeigt eine schematische Draufsicht auf einen Bereich des Mehrschichtkörpers nach Fig. 1c, für ein weiteres Ausführungsbeispiel.
- Fig. 3: zeigt schematische Darstellungen von verschiedenen spulenförmigen Strukturen.
- Fig. 4: zeigt eine schematische Schnittdarstellung eines Mehrschichtkörpers.
- Fig. 5: zeigt eine schematische Schnittdarstellung eines Mehrschichtkörpers.
- Fig. 6: zeigt eine schematische Schnittdarstellung eines Mehrschichtkörpers.
- Fig. 7: zeigt eine schematische Schnittdarstellung eines Mehrschichtkörpers.
- Fig. 8: zeigt eine schematische Schnittdarstellung eines Mehrschichtkörpers.

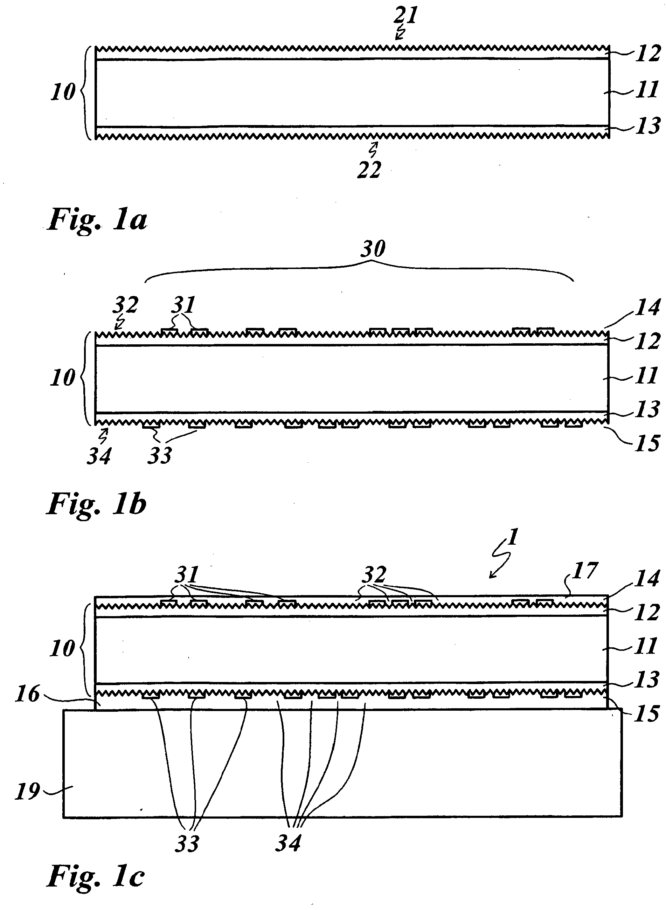

Anhand der Figuren Fig. 1a bis Fig. 3 wird nun im Folgenden die Herstellung eines Mehrschichtkörpers mit einer maschinell auslesbaren Codierung beschrieben.

Zunächst wird ein Trägersubstrat 11 beidseitig mit einer Lackschicht, nämlich einer Lackschicht 12 sowie einer Lackschicht 13 beschichtet und sodann in die Oberflächen der Lackschicht 12 eine Oberflächenstruktur 21 abgeformt und in die Oberflächen der Lackschicht 13 ein Oberflächenrelief 22 abgeformt. Die sich so ergebende Schicht 10 ist in Fig. 1 a gezeigt.

Bei dem Trägersubstrat 11 handelt es sich vorzugsweise um eine transparente Kunststofffolie, beispielsweise eine PET-Folie, PEN-Folie, ABS-Folie oder eine BOPP-Folie, mit einer Schichtdicke zwischen 8 bis 150 µm. Es ist jedoch auch möglich, dass auf das Trägersubstrat 11 verzichtet wird oder noch ein oder mehrere weitere Schichten zwischen den Lackschichten 11 und 13 vorgesehen sind.

Die Lackschichten 12 und 13 weisen jeweils eine Schichtdicke zwischen 0,5 und 5 µm, bevorzugt zwischen 0,5 und 2 µm auf. Die Lackschichten 12 und 13 bestehen jeweils vorzugsweise aus einem thermoplastischen Replizierlack, in welchen mittels Hitze und Druck die Oberflächenstrukturen 21 und 22 abformbar sind. Weiter ist es auch möglich, dass die Lackschichten 12 und 13 aus einem UV-härtbaren Lack bestehen und nach Abformung der Oberflächenreliefe 21 und 22 in die Lackschichten 12 bzw. 13 mittels eines entsprechenden Prägewerkzeugs die Lackschichten mittels UV-Bestrahlung ausgehärtet werden.

Vorzugsweise sind die Lackschichten 12 und 13 sowie das Trägersubstrat 11 hierbei als für den menschlichen Betrachter transparente Schichten ausgebildet und weisen so für das menschliche Auge sichtbaren Wellenlängenbereich eine Transmissivität von mehr als 90% auf.

Im Weiteren ist es auch möglich, die Oberflächenstrukturen 21 und 22 mittels eines Lasers in die Lackschichten 12 und 13 abzuformen.

Weiter ist es möglich, dass auf die Lackschichten 12 und 13 verzichtet wird und die Oberflächenstrukturen 21 und 22 direkt in die sich gegenüberliegenden Oberflächen des Trägersubstrats 11, beispielsweise mittels thermischer Replikation durch Hitze und Druck abgeformt werden. Auch ist es möglich, als Trägersubstrat 11 in diesem Fall einen strahlenhärtbaren Lack einzusetzen, der während oder nach Replikation der Oberflächenstrukturen 21 und 22 durch Strahlung, beispielsweise UV-Strahlung, ausgehärtet wird. Im Weiteren ist es möglich, dass die Lackschichten 12 und 13 nicht vollflächig auf dem Trägersubstrat 11 aufgebracht werden und dass die Oberflächenstrukturen 21 und 22 nicht vollflächig in der Oberfläche der Schicht 10 abgeformt sind, sondern lediglich nur bereichsweise oder musterförmig in der Oberfläche der Schicht 10 abgeformt sind. Auf das Abformen der Oberflächenstrukturen 21 und 22 könnte im Weiteren auch verzichtet werden oder es könnte auch nur die Oberflächenstruktur 21 oder aber die Oberflächenstruktur 22 in der Schicht 10 abgeformt werden.

Bei den Oberflächenstrukturen 21 und 22 handelt es sich jeweils um eine diffraktive Oberflächenstruktur, welche vorzugsweise eine Spatialfrequenz zwischen 250 und 2000 Linien/mm besitzen. Die diffraktiven Strukturen sind hierbei insbesondere zur Generierung eines Hologramms oder eines Kinegram^{®} ausgebildet. Die Relieftiefe der Oberflächenstrukturen 21 und 22 beträgt hierbei vorzugsweise zwischen 0,1 und 50 µm.

Im Weiteren ist es auch möglich, dass die Oberflächenstrukturen 21 und 22 als Makrostrukturen, beispielsweise Mikrolinsenstrukturen, als Blaze-Gitter oder als Mattstrukturen ausgebildet sind. Weiter ist es auch möglich, dass die Oberflächenstrukturen 21 und 22 bereichsweise unterschiedliche der oben erwähnten optisch variablen Strukturen ausbilden. Wie bereits oben angedeutet, können die Oberflächenstrukturen 21 und 22 hierbei auch ebene Bereiche aufweisen, in denen kein optisch variabler Effekt generiert wird.

In einem nächsten Schritt wird die Schicht 10 beidseitig mit jeweils einer metallischen Schicht beschichtet und diese metallische Schicht sodann mittels eines Strukturierungsprozesses wieder teilweise entfernt, sodass sich auf der einen Oberfläche der Schicht 10 eine partielle, musterförmig ausgeformte metallische Schicht 14 und auf der dieser Oberfläche gegenüberliegenden Oberfläche der Schicht 10 eine partielle und musterförmig ausgeformte Schicht 15 ergibt. Das sich so ergebende Schichtgebilde ist beispielsweise in der Fig. 1b gezeigt, die die aus den Lackschichten 12 und 13 sowie dem Trägersubstrat 11 gebildete Schicht 10 sowie die partiell ausgeformten Schichten 14 und 15 zeigt. Wie in Fig. 1b dargestellt, ist die Schicht 14 hierbei in Zonen 31 vorgesehen und Zonen 32 nicht vorgesehen und die Schicht 15 in Zonen 33 vorgesehen und in Zonen 34 nicht vorgesehen.

Wie bereits oben erwähnt, bestehen die Schichten 14 und 15 aus Metall, beispielsweise Al, Cu oder Ag. Es ist jedoch auch möglich, dass die Schichten 14 und 15 auch aus einem anderen elektrisch leitfähigen Material oder auch elektrisch leitfähigen Materialkombinationen bestehen. Die Schichtdicken der Schichten 14 und 15 betragen vorzugsweise zwischen 100 nm und 10 µm. Zur Strukturierung der Schichten 14 und 15 könnten hierbei folgende Verfahren verwendet werden:
So ist es beispielsweise möglich, auf die Oberflächen der Schicht 10 eine vollflächige metallische Schicht, beispielsweise mittels Sputtern oder mittels eines Bedampfungsverfahrens aufzubringen, beispielsweise in einer Schichtdicke von 300 nm aufzubringen. Im Folgenden wird jeweils eine musterförmige Ätzresistschicht mittels eines Druckverfahrens auf die jeweilige metallische Schicht aufgedruckt und mittels eines anschließenden Ätz- und Stripp-Prozesses die jeweilige metallische Schicht in dem Bereich wieder entfernt, in dem die Ätzresistschicht nicht aufgedruckt worden ist. Die Ätzresistschicht wird somit in den Zonen 31 bzw. 33 aufgedruckt und in den Zonen 32 bzw. 34 nicht aufgedruckt. Weiter ist auch möglich, ein Ätzmittel in den Zonen 32 und 34 auf die obere Oberfläche bzw. untere Oberfläche der Schicht 10 aufzudrucken und in den Zonen 31 bzw. 33 nicht aufzudrucken. Weiter ist es auch möglich, vor Aufbringen der metallischen Schichten auf die Schicht 10 einen vorzugsweise pigmentierten Waschlack in den Zonen 32 der oberen Oberfläche aufzudrucken und einen Waschlack in den Zonen 34 der unteren Oberfläche aufzudrucken, nicht jedoch in den Zonen 31 bzw. 33 aufzudrucken. Anschließend wird der sich so ergebende Folienkörper beidseitig mit einer vollflächigen metallischen Schicht beschichtet und anschließend in einem Waschprozess die obere metallische Schicht im Bereich der Zonen 32 und die untere metallische Schicht im Bereich der Zonen 34 wieder entfernt, in denen die jeweilige Waschlackschicht unterhalb der metallischen Schicht vorgesehen ist.

Im Weiteren ist es auch möglich, die Schicht 10 beidseitig mit einer metallischen Schicht zu beschichten und anschließend diese metallische Schicht mittels eines Lasers oder eines anderen ablativen Verfahrens in den Zonen 32 bzw. 34 wieder zu entfernen.

Im Weiteren ist es auch möglich, die sich so ergebenden metallischen Schichten in einem anschließenden Galvanikprozess noch zu verstärken um die gewünschten Schichtdicken zu erzielen.

Weiter kann es hierbei vorteilhaft sein, wenn die Schichten 14 und 15 aus unterschiedlich leitfähigem Material bestehen, welche sich insbesondere in ihrer Farbe oder ihren optischen Eigenschaften unterscheiden. So ist es beispielsweise möglich, dass die Schicht 14 aus Kupfer oder einem transparenten elektrisch leitfähigen Material besteht und die Schicht 15 aus Aluminium besteht oder umgekehrt.

Weiter ist es besonders vorteilhaft, wenn die Bereiche, in denen die Oberflächenstrukturen 21 und 22 in denen die Schicht 10 geformt sind, im Register zu den Zonen 31 oder 32 bzw. 33 oder 34 angeordnet sind. So ist es beispielsweise möglich, dass die Oberflächenstrukturen 21 - zumindest bereichsweise - nur im Bereich der Zonen 32 oder im Bereich der Zonen 31 vorgesehen sind und die Oberfläche der Schicht 10 im Bereich der Zonen 31 bzw. 32 eben ausgebildet ist und/oder dass die Oberflächenstruktur 22 nur im Bereich der Zonen 34 oder im Bereich der Zonen 33 vorgesehen ist und die Oberfläche der Schicht 10 im Bereich der Zonen 33 bzw. 34 eben ausgebildet ist. Hierdurch wird bewirkt, dass der optisch variable Effekt der Oberflächenstrukturen 31 und 22 jeweils nur im Bereich der Zonen 32 oder 31 bzw. im Bereich der Zonen 34 oder 33 generiert wird und der optische Eindruck des Mehrschichtkörpers unmittelbar verfälscht wird, wenn bei einer Nachahmung diese Registrierung nicht eingehalten wird. Hierdurch kann die Fälschungssicherheit des Mehrschichtkörpers noch weiter erhöht werden.

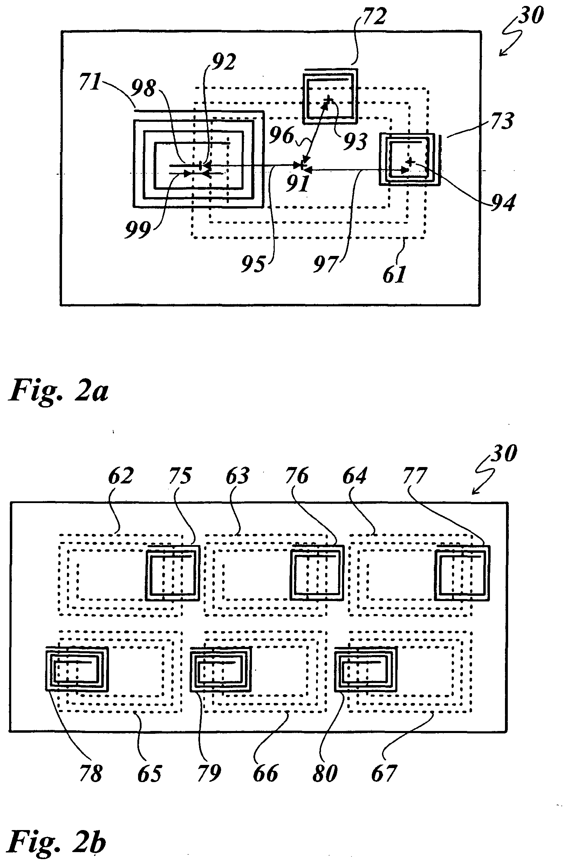

In einem Bereich 30 des in Fig. 1b gezeigten Mehrschichtkörpers sind nun die Schichten 14, 15 und 10 zur Bereitstellung einer maschinell auslesbaren Codierung ausgebildet. Hierfür sind in dem Bereich 30 die Schicht 14 in Form von N ersten spulenförmigen Strukturen und die Schicht 15 in Form von M zweiten spulenförmigen Strukturen ausgeformt. Die ersten und zweiten spulenförmigen Strukturen weisen hierbei jeweils unterschiedliche Geometrien und unterschiedliche, vorbestimmte Resonanzfrequenzen auf, welche die maschinell auslesbare Codierung bereitstellen. Dies wird nun beispielhaft anhand von Fig. 2a verdeutlicht. Fig. 2a zeigt den Bereich 30 mit einer in der Schicht 15 ausgeformten zweiten spulenförmigen Struktur 61 und drei in der Schicht 14 ausgeformten ersten spulenförmigen Strukturen 71, 72 und 73. Die zweite spulenförmige Struktur 61 ist in der Darstellung in Fig. 2a gestrichelt dargestellt, um anzudeuten, dass diese spulenförmige Struktur in einer Schichtlage unterhalb der ersten spulenförmigen Struktur 71 bis 73 angeordnet ist. Hierbei ist noch anzumerken, dass Fig. 2a lediglich eine schematisierte Draufsicht des Bereiches 30 zur Verdeutlichung des Funktionsprinzips zeigt und beispielsweise die Linienbreiten der spulenförmigen Strukturen 61, 71, 72 und 73 deutlich breiter zu wählen sind, als diese in Fig. 2a angedeutet sind.

Wie in Fig. 2a angedeutet, weisen die spulenförmigen Strukturen 71 bis 73 und 61 jeweils unterschiedliche Geometrien auf und sind jeweils so ausgeformt, dass sie unterschiedliche vorbestimmte Resonanzfrequenzen aufweisen, welche die maschinell auslesbare Codierung bereitstellen.

Die spulenförmigen Strukturen 71 bis 73 und 61 weisen hierbei vorzugsweise eine Flächenausdehnung auf, welche einen Flächenbereich von 1000 mm² nicht übersteigt und werden jeweils von einer spulenförmig angeordneten Leiterbahn gebildet, die zwischen 1 und 50 Windungen, vorzugsweise zwischen 2 und 10 Windungen aufweist. Die Breite dieser Leiterbahn beträgt vorzugsweise zwischen 0,05 mm und 5 mm, weiter bevorzugt zwischen 0,05 mm und 1 mm. Die Beabstandung der Leiterbahn benachbarter Windungen zueinander beträgt vorzugsweise weniger als 0,5 mm, weiter bevorzugt zwischen 0,05 bis 0,3 mm. Die Resonanzfrequenz der spulenförmigen Struktur 71 bis 73 und 61 liegt hierbei bevorzugt im Frequenzband von 15 MHz bis 2,0 GHz.

Wie in Fig. 2a dargestellt, weisen die spulenförmigen Strukturen 71 bis 73 jeweils einen Flächenschwerpunkt 92, 93 bzw. 94 auf und die spulenförmige Struktur 61 einen Flächenschwerpunkt 91 auf. Weiterhin, wie in Fig. 2a dargestellt, sind die spulenförmigen Strukturen 71, 72 und 73 jeweils flächenmäßig kleiner als die spulenförmige Struktur 61. Flächenmäßig kleiner bedeutet hierbei, dass die von der Außenkontur die jeweiligen spulenförmigen Strukturen umschlossenen Fläche der spulenförmigen Strukturen 71, 72 oder 73 kleiner als die von den Außenkonturen der spulenförmigen Struktur 61 umschlossenen Fläche ist.

Wie weiter in Fig. 2a angedeutet sind die spulenförmigen Strukturen 71, 72 und 73 bezüglich der spulenförmigen Struktur 61 derart angeordnet, dass die ersten spulenförmigen Strukturen 71, 72 und 73 sich jeweils bereichsweise mit der spulenförmigen Struktur 61 überdecken.

Die Flächenschwerpunkte 92, 93 bzw. 94 der spulenförmigen Strukturen 71, 72 bzw. 73 sind von dem Flächenschwerpunkt 91 der spulenförmigen Struktur 61 jeweils mit einem Abstand 95, 96 bzw. 97 beabstandet, wie dies auch in Fig. 2a angedeutet ist. Langwierige Untersuchungen haben ergeben, dass die Wahl dieser Beabstandungen 95, 96 und 97 entscheidend dafür ist, ob bei Einstrahlung eines RF-Signals auf den Bereich 30 eine der Anzahl der spulenförmigen Strukturen 61, 71, 72 und 73 entsprechende Anzahl von verwertbaren Resonanzpeaks generiert werden kann oder nicht oder ob der Bereich 30 lediglich einen einzigen verwertbaren Resonanzpeak generiert.

Um nun eine der Anzahl der in dem Bereich 30 insgesamt angeordneten spulenförmigen Strukturen entsprechende Anzahl von Resonanzpeaks zu generieren, sind die Beabstandungen 95, 96 und 97 so zu wählen, dass der Flächenschwerpunkt der flächenmäßig kleineren von zwei sich bereichsweise überdeckenden angeordneten ersten und zweiten spulenförmigen Strukturen nicht weiter als D/2 x 0,5, bevorzugt nicht weiter als 0,25, vom äußeren Rand der flächehmäßig größeren der zwei sich bereichsweise überdeckend angeordneten ersten und zweiten spulenförmigen Struktur entfernt ist, wobei D der mittlere Durchmesser der flächenmäßig größeren der zwei sich bereichsweise überdeckend angeordneten ersten und zweiten spulenförmigen Strukturen ist. Dies bedeutet (da die zweite spulenförmige Struktur 61 flächenmäßig größer als jede der ersten spulenförmigen Strukturen 71 bis 73 ist), dass D durch den mittleren Durchmesser der spulenförmigen Struktur 61 bestimmt wird. Unter mittlerem Durchmesser der spulenförmigen Struktur 61 wird hierbei der gemittelte Durchmesser, d.h. das Integral über die sich für alle möglichen Raumrichtungen vom Flächenschwerpunkt 91 aus ergebenden Durchmessern bestimmt. Die spulenförmige Struktur 71 wird so entsprechend zur spulenförmigen Struktur 61 positioniert, dass die Distanz zwischen dem Schnittpunkt der durch die Flächenschwerpunkte 91 und 92 gelegten Geraden mit den dem Flächenschwerpunkt 91 nächstgelegenen äußeren Rand, d.h. der Außenkontur der spulenförmigen Struktur 91, dem Schnittpunkt 98, von dem Flächenschwerpunkt 92 nicht weiter als D/2 x 0,5 entfernt ist, d.h. der in Fig. 2a angedeutete Abstand 99 des Schnittpunkts 98 von dem Flächenschwerpunkt 92 ≤ D/2 x 0,5 ist. Der Abstand 95 wird so in Abhängigkeit von der Position des Flächenschwerpunkts entsprechend gewählt, dass der Abstand 99 der oben angeführten Bedingung entspricht. Entsprechend werden im Weiteren dann auch die Abstände 96 und 97 für eine entsprechende Positionierung der ersten spulenförmigen Struktur 72 und 73 gewählt.

Wie bereits oben angedeutet, ist hierbei weiter bevorzugt, dass der Abstand 99 ≤ D/2 x 0,25 gewählt wird, weiter bevorzugt 99 ≤ D/2 x 0,1 gewählt wird, wodurch noch eine bessere Signalstärke des Antwortsignals generiert werden kann.

Es ist weiter auch möglich, dass eine oder mehrere der spulenförmigen Strukturen 72 und 73 flächenmäßig größer als die spulenförmige Struktur 61 sind. In diesem Fall ist für die jeweilige Positionierung der spulenförmigen Struktur 72 zur spulenförmigen Struktur 61 bzw. der Positionierung der spulenförmigen Struktur 73 zur spulenförmigen Struktur 61 das oben beschriebene Verfahren entsprechend anzuwenden, wobei hier dann von den jeweiligen spulenförmigen Strukturen 72 bzw. 73 als der flächenmäßig größeren Struktur ausgegangen wird.

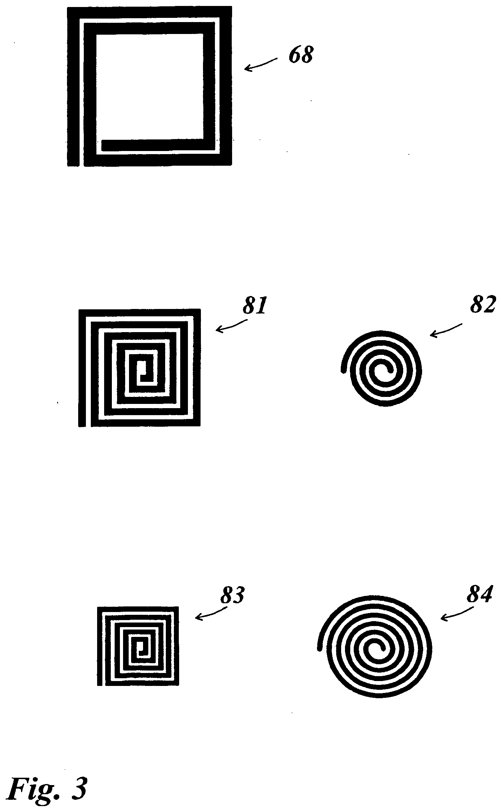

Mögliche, konkrete Ausgestaltungen für erste und zweite spulenförmige Strukturen sind beispielhaft in Fig. 3 verdeutlicht.

Fig. 3 zeigt fünf spulenförmige Strukturen 68, 81, 82, 83 und 84. Diese spulenförmigen Strukturen sind durch die in folgender Tabelle angeführten Strukturparameter gekennzeichnet:

| | Spulenförmige Struktur 68: | Spulenförmige struktur 81: | Spulenförmige Struktur 82: | Spulenförmige Struktur 83: | Spulenförmige Struktur 84: |
|---|---|---|---|---|---|
| Radius: | | | 4,5 mm | | 5,5 mm |
| Breite: | 20 mm | 15mm | | 10 mm | |
| Länge: | 20 mm | 15mm | | 10 mm | |
| Breite der Leiterbahn: | 1 mm | 1 mm | 1 mm | 0,6 mm | 0,6 mm |
| Länge der Leiterbahn: | 141,61 mm | 175,70 mm | 49,95 mm | 115,70 mm | 89,06 mm |
| Beabstandung zwischen zwei Leiterbahnen: | 0,3 mm | 0,3 mm | 0,3 mm | 0,3 mm | 0,3 mm |
| Anzahl der Windungen: | 2 | 5 | 3,5 | 5 | 5,5 |

Fig. 2b zeigt eine weitere mögliche Ausgestaltung des Bereichs 30.

In dem Ausführungsbeispiel nach Fig. 2b weist der Bereich 30 erste spulenförmige Strukturen 75 bis 80 und zweite spulenförmige Strukturen 62 bis 67 auf. Wie bereits oben ausgeführt sind die ersten spulenförmigen Strukturen 75 bis 80 innerhalb der Schicht 14 im Bereich 30 ausgeformt und die zweiten spulenförmigen Strukturen 62 bis 67 innerhalb der Schicht 15 im Bereich 30 ausgeformt. Die spulenförmigen Strukturen 62 und 75, 63 und 76, 64 und 77, 65 und 78, 66 und 79, 67 und 80 sind jeweils zueinander so angeordnet, dass sie in Überdeckung und bzgl. ihrer jeweiligen Flächenschwerpunkte gemäß den in Fig. 2 erläuterten Bedingungen angeordnet sind. Die spulenförmigen Strukturen 62 bis 67 sind hierbei gemäß einem zweidimensionalen unregelmäßigen Raster angeordnet und weisen zueinander jeweils eine unterschiedliche Geometrie und damit unterschiedliche Resonanzfrequenzen auf. Ebenso sind die spulenförmigen Strukturen 75 bis 80 gemäß einem zweidimensionalen Raster angeordnet und weisen zueinander unterschiedliche Geometrien und damit unterschiedliche Resonanzfrequenzen auf.

Durch die Anordnung gemäß Fig. 2 ist es so möglich, in dem Flächenbereich 30 zwölf unterschiedliche Resonanzpeaks und damit ein 12-bit RF-Signal zu kodieren.

Der in Fig. 1b dargestellte und bezüglich der Ausformung der Schichten 14 und 15 gemäß den Figuren 2a bis 3 ausgestaltete Mehrschichtkörper kann nun in weiteren Verfahrensschritten - je nach gewünschtem Anwendungsfall - mit weiteren Schichten versehen werden.

So zeigt beispielsweise Fig. 1c einen Mehrschichtkörper in der Form eines Sicherheitsdokuments, in dem das Folienelement nach Fig. 1b integriert ist.

Der Mehrschichtkörper 1 nach Fig. 1c weist ein Trägersubstrat 19 sowie ein auf dem Trägersubstrat 19 appliziertes Folienelement auf, welches eine Kleberschicht 16, die Schicht 15, die Schicht 10, die Schicht 14 und eine Schutzlackschicht 17 aufweist. Zur Herstellung des Mehrschichtkörpers 1 wird auf die Oberseite des Mehrschichtkörpers nach Fig. 1b die Schutzschicht 17 aufgebracht und auf die Unterseite des Mehrschichtkörpers nach Fig. 1b die Klebeschicht 16 aufgebracht.

Bei der Schutzschicht 17 handelt es sich vorzugsweise um eine Schutzschicht, deren Brechungsindex sich vom Brechungsindex der Lackschicht 12 um nicht mehr als 0,2 unterscheidet. Hierdurch wird sichergestellt, dass der optisch variable Effekt, welcher durch die Oberflächenstruktur 21 generiert wird, lediglich in den Zonen 31 sichtbar ist, in dem die Oberflächenstruktur 21 mit einer Reflexionsschicht, nämlich der Schicht 14, belegt ist. Ebenso ist es von Vorteil, für die Kleberschicht 16 eine Kleberschicht zu wählen, deren Brechungsindex sich von dem Brechungsindex der Lackschicht 13 um nicht mehr als 0,2 unterscheidet, sodass auch der optisch variable Effekt der Oberflächenstruktur 22 lediglich in den Zonen 33 generiert wird, in denen die Oberflächenstruktur 22 mit einer Reflexionsschicht, nämlich der Schicht 15, unterlegt ist.

Bei der Kleberschicht 16 kann es sich hierbei um eine Heißkleberschicht, aber auch um eine Kaltkleberschicht oder um einen UV-aktivierbaren Kleber handeln.

Das so gebildete Folienelement kann dann in Streifen- oder Patchform geschnitten werden und sodann auf das Trägersubstrat 19 des Wertdokuments appliziert werden, indem die Kleberschicht 16 aktiviert wird und das Folienelement auf dem Trägersubstrat 19 festlegt. Vorzugsweise handelt es sich bei dem Trägersubstrat 19 hierbei um eine Schicht aus einem Papiermaterial, beispielsweise dem Substrat einer Banknote oder eines ID-Dokuments. Es ist jedoch auch möglich, dass es sich bei dem Trägersubstrat 19 um eine Kunststofffolie bestehend aus Polyester oder Polycarbonat oder ABS handelt. Weiter ist es auch möglich, dass das Folienelement im Weiteren noch zwischen ein oder mehreren weiteren Schichten des Mehrschichtkörpers einlaminiert wird und so beispielsweise einen integralen Bestandteil eines kartenförmigen Sicherheitsdokuments bildet.

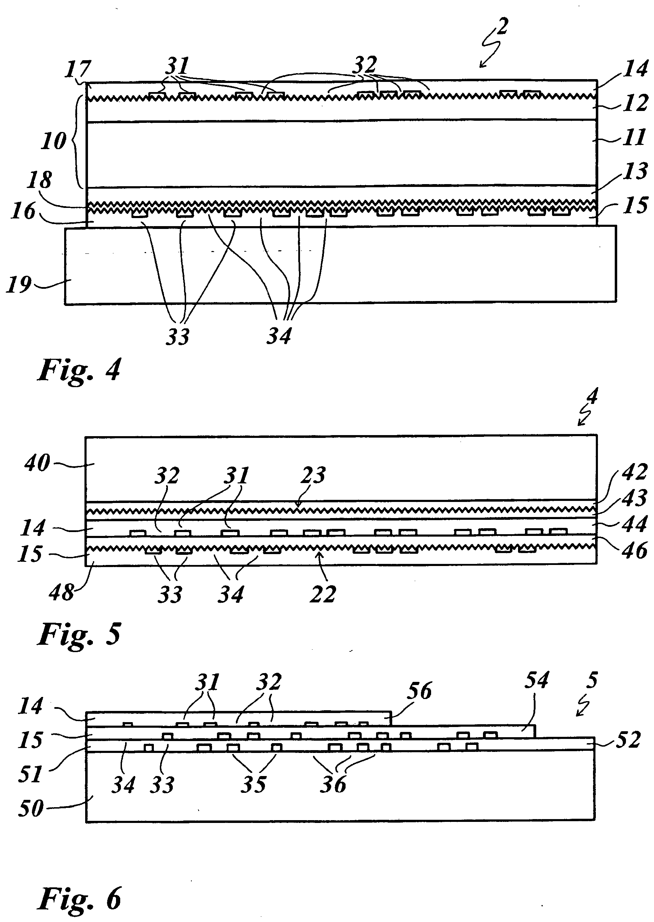

Fig. 4 zeigt eine weitere Ausführungsform, bei der ein Mehrschichtkörper 2 ausgebildet wird:
Fig. 4 zeigt den Mehrschichtkörper 2 mit der Schicht 10, den Schichten 14 und 15, der Schicht 17, der Schicht 16 und dem Trägersubstrat 19. Die vorgenannten Schichten sind wie in dem Ausführungsbeispiel nach Fig. 1b, 1c, 2a, 2b und 3 ausgebildet mit dem Unterschied, dass vor dem Aufbringen der Schicht 15 auf die Oberfläche der Schicht 13 eine Schicht 18 aufgebracht wird. Bei der Schicht 18 handelt es sich um eine HRI-Schicht, d.h. um eine Schicht mit einem gegenüber der Lackschicht 3 hohen Brechungsindex, beispielsweise bestehend aus ZnS oder TiOₓ. Durch die Schicht 8 wird nun bewirkt, dass der optisch variable Effekt der Oberflächenstruktur 22 nicht nur in den Zonen 33, sondern auch in den Zonen 34 generiert wird. Damit ist bei dem Ausführungsbeispiel nach Fig. 4 der optisch variable Effekt der Oberflächenstruktur 21, welche lediglich in den Zonen 31 generiert wird, vor dem Hintergrund des im Wesentlichen vollflächig generierten optisch variablen Effekt der Oberflächenstruktur 22 sichtbar.

Fig. 5 verdeutlicht ein weiteres Ausführungsbeispiel anhand eines Mehrschichtkörpers 4.

Der Mehrschichtkörper 4 weist eine Trägerschicht 40, eine Lackschicht 42, eine Lackschicht 43, eine Kleberschicht 44, die Schicht 14, eine Schicht 46, die Schicht 15 und eine Kleberschicht 48 auf. Der Mehrschichtkörper 4 ist hier als Transferfolie ausgebildet, wobei die Trägerschicht 40 von der darauf folgenden Lackschicht 42 ablösbar ausgebildet ist.

Bei der Lackschicht 42 handelt es sich um eine Replizierlackschicht, in welcher ein optisch aktives Oberflächenrelief 23 abgeformt ist. Die Lackschicht 43 unterscheidet sich bezüglich ihres Brechungsindex um mehr als 0,2 von dem Brechungsindex der Lackschicht 42. Weiter ist es auch möglich auf die Lackschicht 43 zu verzichten oder die Lackschicht 43 durch eine transparente Reflexionsschicht, beispielsweise eine HRI-Schicht, zu ersetzen. Die Schichten 14 und 15 sind beidseits der Schicht 46 angeordnet, wobei die Schicht 46 wie die Schicht 10 nach Fig. 1a ausgestaltet sein kann. In der Ausführungsform nach Fig. 5 besteht die Schicht 46 aus einer Lackschicht, in der die optisch aktive Oberflächenstruktur 22 abgeformt ist und deren andere Oberfläche eben ausgebildet ist. Die Ausformung und Herstellung der Schichten 14 und 15 erfolgt gemäß den Ausführungen zu den Figuren Fig. 1b, 2a, 2b und 3.

Bei der Kleberschicht 48 handelt es sich um eine Heißkleberschicht. Es ist jedoch auch möglich, für die Kleberschicht 48 eine Kaltkleberschicht zu verwenden.

Eine weitere Ausführungsform wird nun anhand von Fig. 6 erläutert.

Fig. 6 zeigt einen Mehrschichtkörper 5, mit einer Schicht 51 aus einem elektrisch leitfähigen Material, den Schichten 14 und 15 sowie Lackschichten 52, 54 und 56. Die Lackschichten 52, 54 und 56 sowie die Trägerschicht 50 bestehen aus einem dielektrischen Material.

Zur Herstellung des Mehrschichtkörpers 5 wird auf die Trägerschicht 50 zunächst die Schicht 51 aufgebracht. Hierzu wird, wie bereits oben in Bezug auf die Schichten 14 und 15 erläutert, ein elektrisch leitfähiges Material so aufgebracht, dass in musterförmigen Bereichen 35 das elektrisch leitfähige Material der Schicht 51 vorgesehen und in Bereichen 36 das elektrisch leitfähige Material der Schicht 51 nicht vorgesehen ist. Bezüglich der Ausgestaltung der Schicht 51 wird auf die Ausführungen zu den Figuren Fig. 1b, 2a, 2b und 3 verwiesen. Anschließend wird die Lackschicht 52 aufgebracht. Sodann wird die Schicht 15, die Schicht 54, die Schicht 14 und die Schicht 56 aufgebracht, wobei bezüglich der Herstellung und Strukturierung der Schichten 14 und 15 ebenso auf die obigen Ausführungen zu den Figuren Fig. 1b, 2a, 2b und 3 verwiesen wird. Der Mehrschichtkörper 5 weist so einen Bereich auf, in dem in der Schicht 14 erste spulenförmige Strukturen ausgeformt sind, in der Schicht 15 zweite spulenförmige Strukturen ausgeformt sind und in der Schicht 51 dritte spulenförmige Strukturen ausgeformt sind. Die ersten und zweiten spulenförmigen Strukturen sind, wie oben bei den Figuren Fig. 1b, 2a, 2b und 3 beschrieben, ausgebildet und zueinander angeordnet. Ebenso sind die zweiten spulenförmigen Strukturen in Bezug auf die dritten spulenförmigen Strukturen und die ersten spulenförmigen Strukturen in Bezug auf die dritten spulenförmigen Strukturen entsprechend angeordnet. Das heißt, die Beabstandung der Flächenschwerpunkte der sich überlappenden ersten und dritten spulenförmigen Strukturen und der sich überlappenden zweiten und dritten spulenförmigen Strukturen sind ebenfalls gemäß der oben für die Beabstandung der überlappend angeordneten ersten und zweiten spulenförmigen Struktur angegebenen Bemessungsregel gewählt.

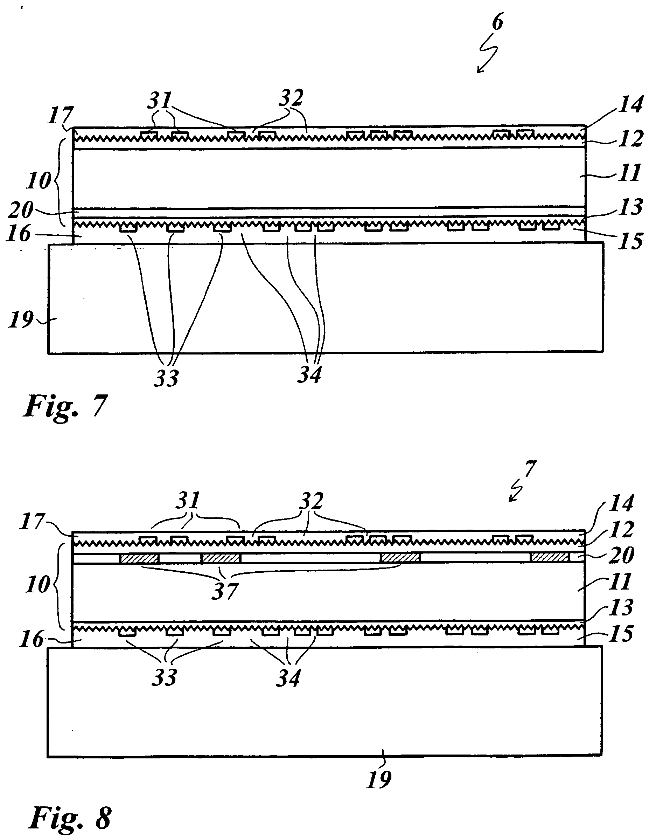

Ein weiteres Ausführungsbeispiel wird nun anhand von Fig. 7 erläutert.

Fig. 7 zeigt einen Mehrschichtkörper 6 mit dem Trägersubstrat 19, der Kleberschicht 16, der Schicht 15, der Lackschicht 13, dem Trägersubstrat 11, der Lackschicht 12, der Schicht 14 und der Schutzschicht 17. Diese Schichten sind entsprechend den gleichnamigen Schichten der Ausführung nach Fig. 1a bis Fig. 3 ausgebildet und es wird auf die diesbezüglichen Ausführungen zu den Figuren Fig. 1a bis Fig. 3 verwiesen. Zusätzlich zu diesen Schichten weist die Schicht 10 noch eine Ablöseschicht 20 auf. Die Ablöseschicht 20 weist eine Schichtdicke von 1 bis 10 µm auf und besteht vorzugsweise aus Wachs oder einer Kleberschicht mit oder ohne Wachskomponente.

Wird nun versucht, das auf dem Trägersubstrat 19 festgelegte Sicherheitselement abzulösen oder abzuziehen, so löst sich ein Teilelement mit der Schicht 14 von einem am Trägersubstrat 11 festhaftenden Teilelement mit der Schicht 15. Hierdurch wird sowohl die maschinell auslesbare Codierung als auch der optisch variable Effekt des Mehrschichtkörpers 6 zerstört, sodass der Manipulationsversuch unmittelbar erkennbar wird. Ein Wiederaufbringen des abgelösten Teilelements ist nicht mehr möglich, da sowohl bezüglich der maschinell auslesbaren Codierung als auch sich ergebenden optisch variablen Effekten eine hohe Passergenauigkeit bezüglich der Anordnung der Schichten 14 und 15 erforderlich ist, welche so nicht mehr erzielt werden kann. In diesem Zusammenhang ist zu erwähnen, dass durch den Ablösevorgang eine Verdehnung der Materialien stattfindet und die Schichten somit nachträglich nicht mehr deckend übereinander gebracht werden können.

Eine weitere Ausführungsform wird nun anhand von Fig. 8 erläutert:
Fig. 8 zeigt einen Mehrschichtkörper 7 mit dem Trägersubstrat 19, der Kleberschicht 16, der Schicht 15, der Lackschicht 13, der Trägerschicht 11, der Ablöseschicht 20, der Lackschicht 12, der Schicht 14 und der Schutzschicht 17. Der Mehrschichtkörper 7 ist wie der Mehrschichtkörper 6 nach Fig. 7 ausgebildet, mit dem Unterschied, dass die Ablöseschicht 20 in einer anderen Lage innerhalb der Schicht 10 angeordnet ist und dass die Ablöseschicht 20 hier nicht vollflächig ausgebildet ist, sondern im Bereich 30 mehrere Haftbrücken 37 aufweist, indem das Material der Ablöseschicht 20 nicht vorgesehen oder durch eine entsprechende partielle Haftschicht ersetzt ist.

Wird nun versucht, das auf dem Trägersubstrat applizierte Folienelement abzulösen, so wird das Schichtpaket umfassend die Lackschicht 12, die Schicht 14 und die Schutzschicht 17 zerstört, da dieses Schichtpaket partiell an den darunter liegenden Schichten haftet und partiell nicht an diesen haftet und somit beim Übergang vom nichthaftenden zu haftenden Bereich die Lackschicht 17 und ggf. auch die darüber liegenden Schichten zerreißen und somit die spulenförmigen ersten Strukturen zerstört oder unbrauchbar gemacht werden.

## Patentansprüche

1. Mehrschichtkörper (1 bis 7), insbesondere Sicherheitselement zur Sicherung von Sicherheitsdokumenten, mit einer maschinell auslesbaren Codierung, wobei der Mehrschichtkörper (1 bis 7) eine erste Schicht (10, 46, 52, 54) aus einem dielektrischen Material, eine partiell auf einer ersten Oberfläche der ersten Schicht vorgesehene zweite Schicht (12) aus einem elektrisch leitfähigen Material aufweist, wobei in einem ersten Flächenbereich (30) die zweite Schicht (12) in Form von N ersten spulenförmigen Strukturen (71 bis 84) ausgeformt ist, und wobei M zweite spulenförmige Strukturen (61-68) vorgesehen sind, wobei die ersten und zweiten spulenförmigen Strukturen (61 bis 68; 71 bis 84) jeweils unterschiedliche Geometrien und unterschiedliche, vorbestimmte Resonanzfrequenzen aufweisen und die maschinell auslesbare Codierung bereitstellen, wobei die N ersten spulenförmigen Strukturen (71 bis 84) und/oder die M zweiten spulenförmigen Strukturen (61 bis 68) jeweils von einer spulenförmig angeordneten Leiterbahn gebildet werden, die zwischen ein und 50 Windungen aufweisen und dass jede der N ersten spulenförmigen Strukturen (71 bis 84) und/oder jede der M zweiten spulenförmigen Strukturen (61 bis 68) einen Flächenbereich von weniger als 1000 mm² belegt, **dadurch gekennzeichnet,**
**dass** der Mehrschichtkörper eine partiell auf einer der ersten Oberfläche gegenüberliegenden zweiten Oberfläche der ersten Schicht vorgesehene dritte Schicht (13) aus einem elektrisch leitfähigen Material aufweist, wobei die zweite und die dritte Schicht weniger als 100 µm voneinander beabstandet sind und die dritte Schicht (13) in Form der M zweiten spulenförmigen Strukturen (61 bis 68) ausgeformt ist, und wobei jede der im ersten Flächenbereich (30) ausgeformten N ersten spulenförmigen Strukturen (71 bis 84) und M zweiten spulenförmigen Strukturen (61 bis 68) so zueinander angeordnet sind, dass im ersten Flächenbereich (30) jede der ersten spulenförmigen Strukturen (71 bis 84) bereichsweise in Überdeckung mit mindestens einer der M zweiten spulenförmigen Strukturen (61 bis 68) angeordnet ist und dass der Flächenschwerpunkt (82, 83, 84) der flächenmäßig kleineren von zwei sich bereichsweise überdeckend angeordneten ersten und zweiten spulenförmigen Struktur nicht weiter als D/2 x 0,5 vom äußeren Rand der flächenmäßig größeren (61) der zwei sich bereichsweise überdeckend angeordneten ersten und zweiten spulenförmigen Strukturen (61, 71, 72, 73) entfernt ist, wobei D das Integral über die sich für alle Raumrichtungen vom Flächenschwerpunkt der flächenmäßig größeren (61) der zwei sich bereichsweise überdeckend angeordneten ersten und zweiten spulenförmigen Strukturen (61, 71, 72, 73) aus ergebenden Durchmesser ist.

2. Mehrschichtkörper nach Anspruch 1,
**dadurch gekennzeichnet,**
**dass** der Flächenschwerpunkt der flächenmäßig kleineren von zwei sich bereichsweise überdeckend angeordneten ersten und zweiten spulenförmigen Strukturen nicht weiter als D /2 x 0,25 von dem äußeren Rand der flächenmäßig größeren der zwei sich bereichsweise überdeckend angeordneten ersten und zweiten spulenförmigen Strukturen entfernt ist.

3. Mehrschichtkörper (1 bis 7) nach einem der vorgehenden Ansprüche,
**dadurch gekennzeichnet,**
**dass** im ersten Flächenbereich (30) zwei oder mehr benachbart zueinander angeordnete erste spulenförmigen Strukturen (71 bis 84) in der zweiten Schicht (12) ausgeformt sind, die zueinander unterschiedliche Geometrien und unterschiedliche, vorbestimmte Resonanzfrequenzen aufweist und/oder dass im ersten Flächenbereich (30) zwei oder mehr benachbart zueinander angeordnete zweite spulenförmige Strukturen (61 bis 68) in der dritten Schicht (13) ausgeformt sind, die zueinander unterschiedliche Geometrien und unterschiedliche, vorbestimmte Resonanzfrequenzen aufweisen.

4. Mehrschichtkörper (1 bis 7) nach einem der vorgehenden Ansprüche,
**dadurch gekennzeichnet,**
**dass** im ersten Flächenbereich jede der zweiten spulenförmigen Strukturen (61 bis 68) bereichsweise in Überdeckung mit mindestens zwei der ersten spulenförmigen Strukturen (71 bis 84) angeordnet ist.

5. Mehrschichtkörper (1 bis 7) nach einem der vorgehenden Ansprüche,
**dadurch gekennzeichnet,**
**dass** im ersten Bereich (30) jede der N ersten spulenförmigen Strukturen (71 bis 84) und/oder der M zweiten spulenförmigen Strukturen (61 bis 68) jeweils von den übrigen ersten und/oder zweiten spulenförmigen Strukturen galvanisch getrennt ist.

6. Mehrschichtkörper (1) nach einem der vorgehenden Ansprüche,
**dadurch gekennzeichnet,**
**dass** die N ersten spulenförmigen Strukturen (74 bis 80) und/oder M zweiten spulenförmigen Strukturen (62 bis 67) in dem ersten Flächenbereich (30) in einer eindimensionalen oder zweidimensionalen Anordnung gemäß eines vorbestimmten ersten bzw. zweiten Rasters angeordnet sind.

7. Mehrschichtkörper (1 bis 7) nach einem der vorgehenden Ansprüche,
**dadurch gekennzeichnet,**
**dass** die ersten und/oder zweiten spulenförmigen Strukturen (71 bis 84, 61 bis 68) so ausgestaltet sind, dass die unterschiedlichen, vorbestimmten Resonanzfrequenzen der N ersten spulenförmigen Strukturen (71 bis 84) und/oder M zweiten spulenförmigen Strukturen (61 bis 68) in einem Frequenzband von 15 MHz bis 2,0 GHz liegen.

8. Mehrschichtkörper (1, 2, 6, 7) nach einem der vorgehenden Ansprüche,
**dadurch gekennzeichnet,**
**dass** innerhalb der ersten Oberfläche der ersten Schicht (10) eine erste Oberflächenstruktur (21) abgeformt ist und innerhalb der zweiten Oberfläche der ersten Schicht (10) eine zweite Oberflächenstruktur (22) abgeformt ist.

9. Mehrschichtkörper (1, 2, 6, 7) nach Anspruch 8,
**dadurch gekennzeichnet,**
**dass** die erste und zweite Oberflächenstruktur (21, 22) zur Generierung unterschiedlicher optisch variabler Informationen, einer ersten optisch variablen Information und einer zweiten optisch variablen Information ausgeformt sind, wobei die erste und die zweite optische variable Information vorzugsweise einander ergänzende Informationen bilden, insbesondere ein oder mehrere ineinander übergehende Linien beinhalten.

10. Mehrschichtkörper nach einem der Ansprüche 8 bis 9,
**dadurch gekennzeichnet,**
**dass** die erste und die zweite Oberflächenstruktur (21, 22) ausgewählt sind aus der Gruppe diffraktive Oberflächenstruktur, refraktive Oberflächenstruktur, Mattstruktur, diffraktive Linsenstruktur, diffraktive Freiformfläche, refraktive Linsenstruktur, Blaze-Gitter.

11. Mehrschichtkörper (1, 2, 4, 6, 7) nach einem der vorgehenden Ansprüche,
**dadurch gekennzeichnet,**
**dass** die erste Schicht (10, 46) transparent ist.

12. Mehrschichtkörper nach einem der Ansprüche 8 bis 11,
**dadurch gekennzeichnet,**
**dass** die erste und/oder die zweite Oberflächenstruktur im ersten Flächenbereich lediglich in den Zonen vorgesehen ist, in denen die zweite bzw. dritte elektrisch leitfähige Schicht vorgesehen ist.

13. Mehrschichtkörper (2) nach einem der Ansprüche 8 bis 12,
**dadurch gekennzeichnet,**
**dass** die erste Oberfläche der ersten Schicht (10) und/oder die zweite Oberfläche der ersten Schicht (10) zumindest bereichsweise in den nicht mit der zweiten Schicht (12) bzw. der dritten Schicht (13) bedeckten Zonen (32, 34) mit einer Schicht aus einem Material mit hohem Brechungsindex, HRI-Schicht, high refractive index (18) versehen ist und dass die erste Oberflächenstruktur (21) bzw. die zweite Oberflächenstruktur (22) zumindest bereichsweise in den nicht mit der zweiten bzw. dritten Schicht versehenen Zonen (32, 34) vorgesehen ist.

14. Mehrschichtkörper (6, 7) nach einem der vorgehenden Ansprüche,
**dadurch gekennzeichnet,**
**dass** die erste Schicht (10) aus zwei oder mehr Teilschichten (11, 12, 13, 20) umfassend eine Ablöseschicht (20) und/oder eine Trägerschicht (11) besteht, wobei die Ablöseschicht (20) vorzugsweise lediglich bereichsweise im ersten Bereich (30) vorgesehen ist und ein oder mehrere Haftbrücken (37) vorgesehen sind, in deren Bereich die Ablöseschicht (20) nicht vorgesehen ist.

## Claims

1. Multilayer body (1 to 7), in particular security element for securing security documents, having machine-readable coding, wherein the multilayer body (1 to 7) has a first layer (10, 46, 52, 54) made of a dielectric material, a second layer (12) that is partially provided on a first surface of the first layer and is made of an electrically conductive material, wherein, in a first surface region (30), the second layer (12) is shaped in the form ofN first coil-shaped structures (71 to 84), and wherein M second coil-shaped structures (61-68) are provided, wherein the first and second coil-shaped structures (61 to 68; 71 to 84) each have different geometries and different predetermined resonant frequencies and provide the machine-readable coding, wherein the N first coil-shaped structures (71 to 84) and/or the M second coil-shaped structures (61 to 68) are each formed from a conductor track arranged to be coil-shaped, said structures having between one and 50 coils, and each of the N first coil-shaped structures (71 to 84) and/or each of the M second coil-shaped structures (61 to 68) covers a surface area of less than 1000mm²,
**characterised in that**
the multilayer body has a third layer (13) that is partially provided on a second surface of the first layer opposite the first surface and is made of an electrically conductive material, wherein the second and the third layer are spaced apart from each other by less than 100 µm and the third layer (13) is shaped in the form of the M second coil-shaped structures (61 to 68), and wherein each of the N first coil-shaped structures (71 to 84) that are formed in the first surface region (30) and M second coil-shaped structures (61 to 68) are arranged relative to one another in such a way that, in the first surface region (30), each of the first coil-shaped structures (71 to 84) is regionally arranged to overlap with at least one of the M second coil-shaped structures (61 to 68) and the area centre of gravity (82, 83, 84) of the smaller-area structure of two first and second coil-like structures arranged to regionally overlap is no further than D/2 x 0.5 away from the outer edge of the larger-area structure (61) of the two first and second coil-like structures (61, 71, 72, 73) arranged to regionally overlap, wherein D is the integral over the larger-area structure (61) for all spatial directions from the area centre of gravity of the first and second coil-shaped structures (61, 71, 72, 73) that are arranged to regionally overlap from resulting diameters.

2. Multilayer body according to claim 1,
**characterised in that**
the area centre of gravity of the smaller-area structure of the two first and second coil-shaped structures that are arranged to regionally overlap is removed by no more than D/2 x 0.25 from the outer edge of the larger-area structure of the two first and second coil-shaped structures that are arranged to regionally overlap.

3. Multilayer body (1 to 7) according to one of the preceding claims,
**characterised in that**,
in the first surface region (30), two or more first coil-shaped structures (71 to 84) that are arranged adjacent to one another are formed in the second layer (12) that has geometries that are different to one another and different predetermined resonant frequencies and/or, in the first surface region (30), two or more second coil-shaped structures (61 to 68) that are arranged adjacent to one another are formed in the third layer (13) that have geometries that are different to one another and different predetermined resonant frequencies.

4. Multilayer body (1 to 7) according to one of the preceding claims,
**characterised in that**,
in the first surface region, each of the second coil-shaped structures (61 to 68) is arranged to regionally overlap with at least two of the first coil-shaped structures (71 to 84).

5. Multilayer body (1 to 7) according to one of the preceding claims,
**characterised in that**,
in the first region (30), each of the N first coil-shaped structures (71 to 85) and/or M second coil-shaped structures (61 to 68) is in each case galvanically separated from the rest of the first and/or second coil-shaped structures.

6. Multilayer body (1) according to one of the preceding claims,
**characterised in that**
the N first coil-shaped structures (74 to 80) and/or M second coil-shaped structures (62 to 67) are arranged in the first surface region (30) in a one-dimensional or two-dimensional arrangement according to a predetermined first or second grid.

7. Multilayer body (1 to 7) according to one of the preceding claims,
**characterised in that**
the first and/or second coil-shaped structures (71 to 84, 61 to 68) are formed in such a way that the different predetermined resonant frequencies of the N first coil-shaped structures (71 to 84) and/or M second coil-shaped structures (61 to 68) lie in a frequency band of 15 MHz to 2.0 GHz.

8. Multilayer body (1, 2, 6, 7) according to one of the preceding claims,
**characterised in that**
a first surface structure (21) is moulded inside the first surface of the first layer (10) and a second surface structure (22) is moulded inside the second surface of the first layer (10).

9. Multilayer body (1, 2, 6, 7) according to claim 8,
**characterised in that**
the first and second surface structures (21, 22) are formed to generate different optically variable information, a first piece of optically variable information and a second piece of optically variable information, wherein the first and the second pieces of optically variable information preferably form pieces of information that are complementary to each other, in particular contain one or more lines that merge into one another.

10. Multilayer body according to one of claims 8 or 9,
**characterised in that**
the first and the second surface structures (21, 22) are selected from the group of diffractive surface structure, refractive surface structure, matt structure, diffractive lens structure, diffractive free-form surface, refractive lens structure, blazed grating.

11. Multilayer body (1, 2, 4, 6, 7) according to one of the preceding claims,
**characterised in that**
the first layer (10, 46) is transparent.

12. Multilayer body according to one of claims 8 to 11,
**characterised in that**
the first and/or the second surface structure in the first surface region is only provided in the zones in which the second or third electrically conductive layer is provided.

13. Multilayer body (2) according to one of claims 8 to 12,
**characterised in that**
the first surface of the first layer (10) and/or the second surface of the first layer (10) is provided with a layer made of a material with a high refraction index, HRI layer, high refractive index, (18) at least regionally in the zones (32, 34) that are not covered by the second layer (12) or the third layer (13), and the first surface structure (21) or the second surface structure (22) is provided at least regionally in the zones (32, 34) that are not provided with the second or third layer.

14. Multilayer body (6, 7) according to one of the preceding claims,
**characterised in that**
the first layer (10) consists of two or more partial layers (11, 12, 13, 20) comprising a detaching layer (20) and/or a carrier layer (11), wherein the detaching layer (20) is provided preferably only regionally in the first region (30) and one or more adhesive bridges (37) are provided, in the region of which the detaching layer (20) is not provided.

## Revendications

1. Corps multicouche (1 à 7), en particulier élément de sécurité servant à sécuriser des documents de sécurité, comprenant un codage pouvant être lu par une machine, dans lequel le corps multicouche (1 à 7) présente une première couche (10, 46, 52, 54) composée d'un matériau diélectrique, une deuxième couche (12) prévue en partie sur une première face supérieure de la première couche, composée d'un matériau électroconducteur, dans lequel la deuxième couche (12) est formée dans une première zone de surface (30), sous la forme de N premières structures (71 à 84) en forme de bobine, et dans lequel M deuxièmes structures (61 - 68) en forme de bobine sont prévues, dans lequel les premières et deuxièmes structures (61 à 68 ; 71 à 84) en forme de bobine présentent respectivement des géométries différentes et des fréquences de résonance prédéfinies différentes et fournissent le codage pouvant être lu par une machine, dans lequel les N premières structures (71 à 84) en forme de bobine et/ou les M deuxièmes structures (61 à 68) en forme de bobine sont formées respectivement par une piste conductrice disposée de manière à présenter une forme de bobine, lesquelles présentent entre 1 et 50 spires et chacune des N première structures (71 à 84) en forme de bobine et/ou chacune des M deuxièmes structures (61 à 68) en forme de bobine occupe une zone de surface inférieure à 1000 mm²,
**caractérisé en ce**
**que** le corps multicouche présente une troisième couche (13) prévue en partie sur une deuxième face supérieure, faisant face à la première face supérieure, de la première couche, composée d'un matériau électroconducteur, dans lequel la deuxième et la troisième couche sont espacées l'une de l'autre à moins de 100 µm et la troisième couche (13) est formée sous la forme des M deuxièmes structures (61 à 68) en forme de bobine, et dans lequel chacune des N premières structures (71 à 84) en forme de bobine formées dans la première zone de surface (30) et des M deuxièmes structures (61 à 68) en forme de bobine sont disposées l'une par rapport à l'autre de telle sorte que dans la première zone de surface (30), chacune des premières structures (71 à 84) en forme de bobine est disposée par endroits en superposition avec au moins une des M deuxièmes structures (61 à 68) en forme de bobine, et en ce que le centre de la zone de surface (82, 83, 84) de la plus petite, en matière de surface, parmi deux première et deuxième structures en forme de bobine disposées par endroits de manière superposée n'est pas éloignée plus de D/2 x 0,5 du bord extérieur de la plus grande (61) en matière de surface des deux première et deuxième structures (61, 71, 72, 73) en forme de bobine disposées par endroits en superposition, dans lequel D est l'intégrale par rapport aux diamètres résultant pour toutes les directions spatiales du centre de surface de la plus grande (61) en matière de surface des deux première et deuxième structures (61, 71, 72, 73) disposées par endroits de manière superposée.

2. Corps multicouche selon la revendication 1,
**caractérisé en ce**
**que** le centre de surface de la plus petite en matière de surface de deux première et deuxième structures en forme de bobine disposées par endroits de manière superposée n'est pas éloigné plus de D/2 x 0,25 du bord extérieur de la plus grande en matière de surface des deux première et deuxième structures en forme de bobine disposées par endroits de manière superposée.

3. Corps multicouche (1 à 7) selon l'une quelconque des revendications précédentes,
**caractérisé en ce**
**que** deux premières structures (71 à 84) en forme de bobine ou plus disposées de manière adjacente les unes par rapport aux autres sont formées dans la deuxième couche (12) dans la première zone de surface (30), lesquelles présentent des géométries différentes les unes par rapport aux autres et des fréquences de résonnance prédéfinies différentes, et/ou en ce que dans la première zone de surface (30), deux deuxièmes structures (61 à 68) en forme de bobine ou plus disposées de manière adjacente l'une par rapport à l'autre sont formées dans la troisième couche (13), lesquelles présentent des géométries différentes les unes par rapport aux autres et des fréquences de résonnance prédéfinies différentes.

4. Corps multicouche (1 à 7) selon l'une quelconque des revendications précédentes,
**caractérisé en ce**
**que** chacune des deuxièmes structures (61 à 68) en forme de bobine est disposée dans la première zone de surface par endroits en superposition avec au moins deux des premières structures (71 à 84) en forme de bobine.

5. Corps multicouche (1 à 7) selon l'une quelconque des revendications précédentes,
**caractérisé en ce**
**que** chacune des N premières structures (71 à 84) en forme de bobine et/ou des M deuxièmes structures (61 à 68) en forme de bobine est séparée de manière galvanique des premières et/ou deuxièmes structures en forme de bobine restantes dans la première zone (30).

6. Corps multicouche (1) selon l'une quelconque des revendications précédentes,
**caractérisé en ce**
**que** les N premières structures (74 à 80) en forme de bobine et/ou les M deuxièmes structures (62 à 67) en forme de bobine sont disposées dans la première zone de surface (30) selon une disposition monodimensionnelle ou bidimensionnelle selon une première ou une deuxième trame prédéfinie.

7. Corps multicouche (1 à 7) selon l'une quelconque des revendications précédentes,
**caractérisé en ce**
**que** les premières et/ou les deuxièmes structures (71 à 84, 61 à 68) en forme de bobine sont configurées de telle sorte que les différentes fréquences de résonnance prédéfinies des N premières structures (71 à 84) en forme de bobine et/ou des M deuxièmes structures (61 à 68) en forme de bobine se situent dans une bande de fréquences allant de 15 MHz à 2,0 GHz.

8. Corps multicouche (1, 2, 6, 7) selon l'une quelconque des revendications précédentes,
**caractérisé en ce**
**qu'**une première structure de face supérieure (21) est reproduite par moulage à l'intérieur de la première surface supérieure de la première couche (10), et en ce qu'une deuxième structure de face supérieure (22) est reproduite par moulage à l'intérieur de la deuxième face supérieure de la première couche (10).

9. Corps multicouche (1, 2, 6, 7) selon la revendication 8,
**caractérisé en ce**
**que** la première et la deuxième structure de face supérieure (21, 22) sont formées afin de générer des informations différentes à variation optique, une première information à variation optique et une deuxième information à variation optique, sachant que la première et la deuxième information à variation optique forment des informations se complétant l'une l'autre de préférence, en particulier renferment une ou plusieurs lignes se confondant les unes dans les autres.

10. Corps multicouche selon l'une quelconque des revendications 8 à 9,
**caractérisé en ce**
**que** la première et la deuxième structure de face supérieure (21, 22) sont choisies parmi le groupe comprenant la structure de face supérieure diffractive, la structure de face supérieure réfractive, la structure mate, la structure de lentille diffractive, la surface à forme libre diffractive, la structure de lentille réfractive, le réseau blaze.

11. Corps multicouche (1, 2, 4, 6, 7) selon l'une quelconque des revendications précédentes,
**caractérisé en ce**
**que** la première couche (10, 46) est transparente.

12. Corps multicouche selon l'une quelconque des revendications 8 à 11,
**caractérisée en ce**
**que** la première et/ou la deuxième structure de face supérieure sont prévues dans la première zone de surface seulement dans des régions, dans lesquelles la deuxième ou la troisième couche électroconductrice est prévue.

13. Corps multicouche (2) selon l'une quelconque des revendications 8 à 12,
**caractérisé en ce**
**que** la première face supérieure de la première couche (10) et/ou la deuxième face supérieure de la première couche (10) sont prévues au moins par endroits dans les régions (32, 34) non recouvertes de la deuxième couche (12) ou de la troisième couche (13), avec une couche composée d'un matériau présentant un indice de réfraction élevé, une couche HRI, high refractive index, (18), et en ce que la première structure de face supérieure (21) ou la deuxième structure de face supérieure (22) sont prévues au moins par endroits dans les régions (32, 34) non dotées de la deuxième ou de la troisième couche.

14. Corps multicouche (6, 7) selon l'une quelconque des revendications précédentes,
**caractérisé en ce**
**que** la première couche (10) est constituée de deux couches partielles (11, 12, 13, 20) ou plus comprenant une couche de décollement (20) et/ou une couche de support (11), dans lequel la couche de décollement (20) est prévue de préférence seulement par endroits dans la première zone (30) et un ou plusieurs ponts d'adhérence (37) sont prévus, dans la zone desquels la couche de décollement (20) n'est pas prévue.
